# EUROPEAN PATENT APPLICATION

(11) **EP 4 502 237 A1**
(43) Date of publication of application: **05.02.2025**
(21) Application number: 23818983.1
(22) Date of filing: 30.05.2023
(51) Int. Cl.: C25B 9/00, C25B 1/00

(54) **ELECTROLYSIS GENERATION APPARATUS AND CONTROL METHOD THEREFOR, AND ELECTRICAL DEVICE**

(30) Priority: 10.06.2022 CN 202210656234
(71) Applicant: Foshan Shunde Midea Electric Science and Technology Co., Ltd., Foshan, Guangdong 528311 (CN); GD Midea Air-Conditioning Equipment Co., Ltd., Foshan, Guangdong 528311 (CN)
(72) Inventor: MA, Ruida, Foshan, Guangdong 528311 (CN); FANG, Wei, Foshan, Guangdong 528311 (CN); CAI, Xitong, Foshan, Guangdong 528311 (CN); ZHOU, Hongming, Foshan, Guangdong 528311 (CN); LI, Qingyun, Foshan, Guangdong 528311 (CN); LI, Yu, Foshan, Guangdong 528311 (CN); YU, Zhenzhen, Foshan, Guangdong 528311 (CN)
(74) Representative: RGTH
(86) International application number: PCT/CN2023/097209
(87) International publication number: WO 2023/236818

(57) **Abstract**

Disclosed herein are an electrolysis generation apparatus and a control method therefor, and an electrical device. The electrolysis generation apparatus comprises an electrolysis assembly (10), a first power supply circuit (41) and a second power supply circuit (42), wherein the electrolysis assembly (10) comprises a first electrode (11) and a second electrode (12), which are arranged opposite and spaced apart from each other, and the first power supply circuit (41) is connected to the first electrode (11), and the second power supply circuit (42) is connected to the second electrode (12). An electrolysis controller (43) is configured to control the first power supply circuit (41) and the second power supply circuit (42) to alternately operate at a preset alternating interval, so as to change the direction of a current between the first electrode (11) and the second electrode (12).

## Description

### CROSS-REFERENCE TO RELATED APPLICATION

The present application claims priority to Chinese patent application 202210656234.6 filed June 10, 2022, the entire contents of which are incorporated herein by reference.

### TECHNICAL FIELD

The present disclosure relates to the field of control technologies, and in particular to an electrolysis generation apparatus and a control method therefor, and an electrical device.

### BACKGROUND

A hypochlorous acid generation apparatus relies on electrolytic brine to generate hypochlorous acid. Electrolytic brine generally needs a constant current source. Meanwhile, in order to prolong the service life of electrolysis sheets, it is necessary to change the flow direction of the current between two electrolysis sheets through a reverse control. At present, in order to change the flow direction of the current between two electrolysis sheets, it is necessary to control a current reversal through a dedicated IC chip or relay, resulting in complex structure and high cost in controlling the current reversal between the electrolysis sheets.

### SUMMARY

The present disclosure provides an electrolysis generation apparatus and a control method therefor, and an electrical device, which can solve the technical problems of complex structure and high cost in controlling the current reversal between electrolysis sheets.

In a first aspect of the present disclosure, an electrolysis generation apparatus is provided, which comprises: an electrolysis assembly, comprising a first electrode and a second electrode which are arranged opposite and spaced apart from each other; a first power supply circuit, connected to the first electrode; a second power supply circuit, connected to the second electrode; and an electrolysis controller controlling the first power supply circuit and the second power supply circuit to alternately operate at a preset alternating interval, so as to change the direction of a current between the first electrode and the second electrode.

In a second aspect of the present disclosure, a control method for an electrolysis generation apparatus is provided, where the electrolysis generation apparatus comprises: a first electrode and a second electrode which are arranged opposite and spaced apart from each other, a first power supply circuit connected to the first electrode, and a second power supply circuit connected to the second electrode; and the method comprises: controlling the first power supply circuit and the second power supply circuit to alternately operate at a preset alternating interval, so as to change the direction of a current between the first electrode and the second electrode.

In a third aspect of the present disclosure, an electrical device is provided, which comprises an electrolysis generation apparatus, where the electrolysis generation apparatus comprises a first electrode and a second electrode which are arranged opposite and spaced apart from each other, a first power supply circuit connected to the first electrode, and a second power supply circuit connected to the second electrode; and the electrical device further comprises a memory, a processor and a program stored in the memory and executable on the processor, where the program, when executed by the processor, causes the processor to implement the method described in any one of the implementations in the second aspect.

### BRIEF DESCRIPTION OF DRAWINGS

In order to illustrate the technical schemes in the present disclosure clearly, the figures to be used in the description of some embodiments will be briefly introduced below. Apparently, the figures in the following description are merely some embodiments of the present disclosure. For those having ordinary skills in the art, other figures can also be obtained according to these figures without paying creative labor.
Fig. 1 is a schematic structural diagram of an electrolysis generation apparatus according to some embodiments of the present disclosure;
Fig. 2 is a diagram showing circuit topology of the electrolysis generation apparatus in Fig. 1;
Fig. 3 is a schematic diagram showing a current direction when a first power supply circuit in Fig. 2 operates;
Fig. 4 is a schematic diagram showing a current direction when a second power supply circuit in Fig. 2 operates;
Fig. 5 is a schematic diagram of a temperature detection circuit in Fig. 2;
Fig. 6 is a schematic diagram of the first power supply circuit, the second power supply circuit, a voltage sampling circuit and a current detection circuit in Fig. 2;
Fig. 7 is a flowchart of a control method for an electrolysis generation apparatus according to some embodiments of the present disclosure; and
Fig. 8 is a schematic structural diagram of an electrical device according to some embodiments of the present disclosure.

### DETAILED DESCRIPTION

The present disclosure provides an electrolysis generation apparatus and a control method therefor, and an electrical device, which can avoid polarization of electrodes of the electrolysis generation apparatus, thereby prolonging the service life of electrolysis electrodes and reducing circuit complexity. The general idea is as follows: the electrolysis generation apparatus comprises a first electrode and a second electrode which are arranged opposite and spaced apart from each other; a first power supply circuit connected to the first electrode; a second power supply circuit connected to the second electrode; and an electrolysis controller configured to control the first power supply circuit and the second power supply circuit to alternately operate at a preset alternating interval, so as to change the direction of a current between the first electrode and the second electrode.

In order to make the objects, technical schemes and advantages of the present disclosure clear, the technical schemes in the present disclosure will be clearly and completely described in conjunction with the drawings and embodiments. Apparently, the embodiments to be described herein are only some, but not all of the embodiments of the present disclosure. All other embodiments obtained by those having ordinary skills in the art without paying any creative effort on the basis of the embodiments in the present disclosure shall fall into the protection scope of the present disclosure.

It should be noted that all directional indications in the present disclosure are only used to illustrate the relative positional relationship, movement status, etc., between components in a certain specific posture. If the specific posture changes, the directional indications will change accordingly.

In the present disclosure, unless specified or limited otherwise, terms such as "connected", "fixed", etc., shall be understood in broad sense, for example, "fixed" may refer to fixed connection or detachable connection or integral connection, may refer to mechanical connection or electrical connection, may refer to direct connection or indirect connection through an intermediate medium, or may refer to inner communication of two elements or interaction between two elements, unless otherwise specifically defined. For those having ordinary skills in the art, the specific meanings of the above terms in the present disclosure may be understood according to concrete conditions.

In addition, the terms "first", "second" and the like are used in the present disclosure for the purpose of description and are not intended to indicate or imply relative importance or significance or to imply the number of indicated technical features. Thus, the feature defined by "first" and "second" can explicitly or impliedly comprises one or more of the features. In addition, the technical schemes of various embodiments may be combined with each other based on the fact that they can be realized by those having ordinary skills in the art. When the combination of technical schemes is contradictory or impossible to realize, it should be considered that such combination of technical schemes does not exist and is not within the protection scope required by the present disclosure.

The present disclosure provides an electrolysis generation apparatus, which may be used for any electrical device requiring an electrolysis process, such as a disinfection machine or any electrical device integrated with a disinfection function.

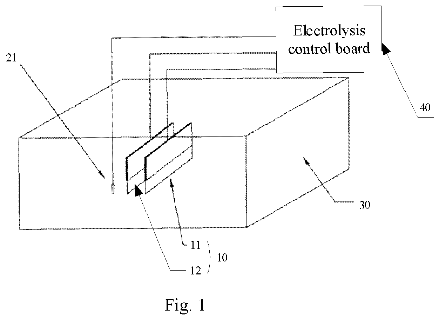

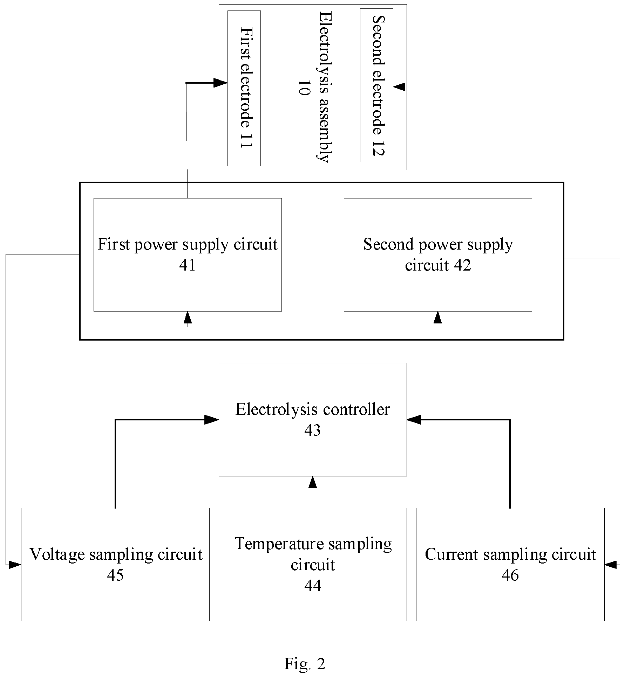

Fig. 1 is a schematic structural diagram of an electrolysis generation apparatus according to some embodiments of the present disclosure, and Fig. 2 is a diagram showing circuit topology of the electrolysis generation apparatus in Fig. 1. As shown in Figs. 1 and 2, the electrolysis generation apparatus according to some embodiments of the present disclosure comprises an electrolysis assembly 10, a first power supply circuit 41 and a second power supply circuit 42. The electrolysis assembly 10 comprises a first electrode 11 and a second electrode 12 which are arranged opposite and spaced apart from each other. The first power supply circuit 41 is connected to the first electrode 11, and the second power supply circuit 42 is connected to the second electrode 12. The first power supply circuit 41 and the first power supply circuit 41 alternately operate at a preset alternating interval, so as to change the direction of a current between the first electrode 11 and the second electrode 12.

As shown in Fig. 1, the first power supply circuit 41 and the second power supply circuit 42 may be arranged on an electrolysis control board 40.

As shown in Fig. 2, the electrolysis generation apparatus may further comprise an electrolysis controller 43. The electrolysis controller 43 is arranged on the electrolysis control board 40. The electrolysis controller 43 is connected to the first power supply circuit 41 and the second power supply circuit 42, and is configured to control the first power supply circuit 41 and the first power supply circuit 41 to alternately operate at a preset alternating interval. The preset alternating interval time is measured in hour, for example, one hour, two hours, or the like.

The electrolysis generation apparatus provided according to some embodiments of the present disclosure provide two power supply circuits for the electrolysis assembly 10, and the direction of a current between the first electrode 11 and the second electrode 12 is changed by controlling the two power supply circuits to alternately operate. Thus, a simple and effective current reversal is achieved, to avoid polarization of the first electrode 11 and the second electrode 12 caused by being in the same polarity for a long time, thereby prolonging the service life of the electrolysis assembly 10, reducing circuit complexity, saving costs, and increasing electrolysis reliability.

As shown in Fig. 1, in some implementations, the electrolysis assembly 10 may further comprise an electrolyzer 30 for containing electrolyte. The first electrode 11 and the second electrode 12 extend into the electrolyzer 30. In the case where electrolyte is contained in the electrolyzer 30, the first electrode 11 and the second electrode 12 are immersed in the electrolyte contained in the electrolyzer 30. It should be noted that the electrolyte composition varies according to different actual application scenarios of the electrolysis generation apparatus. For example, if the electrolysis generation apparatus is applied to a disinfection machine, the electrolyte contained in the electrolyzer 30 may be brine, which is electrolyzed to generate hypochlorous acid for disinfection.

In some implementations of the present disclosure, the electrolysis generation apparatus further comprises a temperature detection circuit 44 configured to detect an electrolyte temperature. The electrolysis controller 43 is further configured to acquire a current electrolyte temperature fed back by the temperature detection circuit 44, and adjust an output voltage and an output current of a target power supply circuit according to the current electrolyte temperature, where the target power circuit is a currently operating power circuit among the first power circuit 41 and the second power circuit 42.

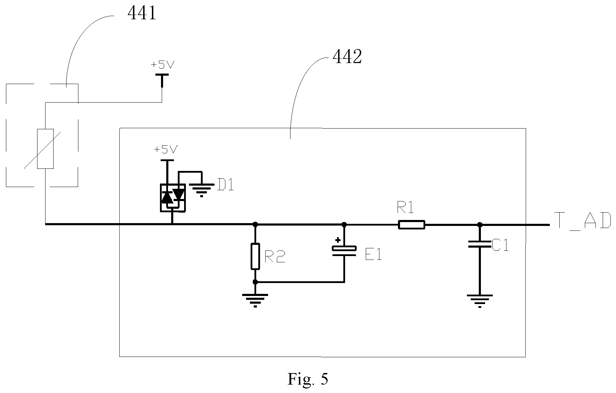

As shown in Figs. 1 and 5, Fig. 5 is a schematic diagram of a temperature detection circuit in Fig. 2. In some implementations, the temperature detection circuit 44 comprises a temperature sensor 441. A probe 21 of the temperature sensor 441 is configured to be inserted into the electrolyte in the electrolyzer 30 to detect the electrolyte temperature, and a working voltage applied to the temperature sensor 441 may be 5 V. It can be understood that in order to sample a temperature signal detected by the temperature sensor 441, the temperature detection circuit 44 may further comprise a temperature sampling circuit 442 connected to the temperature sensor 441.

As shown in Fig. 5, in some implementations, the temperature sampling circuit 442 comprises a pair of diodes, which is formed by connecting two diodes in series. One end of the diode pair is applied with a working voltage of 5 V, and the other end of the diode pair is grounded. An output terminal of the temperature sensor 441 is connected between the two diodes of the diode pair. The output terminal of the temperature sensor 441 is also connected to one end of a second resistor R2 and a positive electrode of a first polar capacitor E1, and the other end of the second resistor R2 and a negative electrode of the first polar capacitor E1 are grounded. The output terminal of temperature sensor 441 is also connected to a first end of a first resistor R1, a second end of the first resistor R1 is connected to one side of a first capacitor C1, and the other side of the first capacitor C1 is grounded. An output of the temperature sampling circuit 442 is arranged at the second end of the first resistor R1. It should be noted that in the temperature sampling circuit 442, the diode pair plays a protective role in dividing current, the first polar capacitor E1 and the first capacitor C1 play a role in filtering, the second resistor R2 plays a role in dividing voltage, and the first resistor R1 plays a role in limiting current.

As the electrolysis process of the electrolysis generation apparatus proceeds, the first power supply circuit 41 and the second power supply circuit 42 may alternately serve as the target power supply circuit. When the first power supply circuit 41 operates, the output voltage and output current of the first power supply circuit 41 are controlled according to the current electrolyte temperature fed back by the temperature detection circuit 44; and when the second power supply circuit 42 operates, the output voltage and output current of the second power supply circuit 42 are controlled according to the current electrolyte temperature fed back by the temperature detection circuit 44.

It can be understood that in order to accurately adjust the output voltage and output circuit of the target power supply circuit according to the change in electrolyte temperature, in the process of adjusting the output voltage and output current of the target power supply circuit according to the current electrolyte temperature, the electrolysis controller 43 is further configured to: determine a temperature offset between the current electrolyte temperature and a reference temperature, where a reference current value and a reference voltage value are preset for the reference temperature; determine a voltage compensation value and a current compensation value matched with the current electrolyte temperature according to the temperature offset and a preset compensation coefficient; update a target voltage value according to the voltage compensation value and the reference voltage value, and adjust an output voltage of the target power supply circuit to the target voltage value; and update a target current value according to the current compensation value and the reference current value, and adjust an output current of the target power supply circuit to the target current value.

In the electrolysis generation apparatus provided according to some implementations of the present disclosure, the output current and output voltage of the target power supply circuit may be controlled according to the change in electrolyte temperature at the position where the first electrode 11 and the second electrode 12 are located, such that a maximum electrolysis power at the current electrolyte temperature can be achieved according to the current and voltage output by the target power supply circuit, thereby improving electrolysis efficiency and electrolysis power.

In some implementations, the reference temperature is a pre-selected temperature value, and a voltage value and a current value required for each electrolysis strength of a designed power supply circuit are determined through experiments at the selected reference temperature. Thus, different electrolysis strengths may correspond to different reference voltage values and multiple reference current values at the same reference temperature. For example, when 25°C is selected as the reference temperature, the voltage value and current value required for each electrolysis strength are determined in advance through experiments conducted at the electrolyte temperature of 25°C, and a one-to-one correspondence between each of the electrolysis strengths and the corresponding reference voltage value and reference current value is obtained. The voltage value and current value required for each electrolysis strength are defined based on the fact that the surface temperature rise of all components in an electric control board of the electrical device does not exceed a preset standard (enterprise standard or national standard) when the maximum electrolysis power is output at the temperature of 25°C. Therefore, other temperature values may also be selected as the reference temperature in the actual implementation process.

In the electrolysis generation apparatus provided according to some implementations of the present disclosure, since the reference temperature and the reference current value and reference voltage value corresponding to the reference temperature are preset, the output voltage and the output current can be accurately adjusted during the operation of the first power supply circuit 41 and the second power supply circuit 42.

In some implementations, the electrical device is provided with various electrolysis strength levels (for example, taking a disinfection machine as an example, an operation interface of the disinfection machine is provided with strength levels for a user to select to generate hypochlorous acid). When the electrical device is powered on, an electrolysis strength level set by the user is read, and a reference voltage value and a reference current value corresponding to the electrolysis strength level set by the user are read.

It should be understood that in an initial state of the electrical device just powered on, the target power supply circuit is controlled to take the read reference voltage value as an initial target voltage value, the output current of the target power supply circuit is controlled to be an initial target voltage value, and the output voltage is controlled to be the initial target current value, to supply power to the electrolysis assembly 10. Then, the current electrolyte temperature is read as T0, and a temperature offset value T_OFFSET = OFFSET = |T0-25°C| is calculated, thus obtaining a voltage compensation value V_OFFSET = T_OFFSET*KV (KV value is a compensation coefficient obtained to ensure that the surface temperature rise of an electronic control component does not exceed the enterprise standard or national standard temperature), and obtaining a current compensation value I_OFFSET = T_OFFSET*KI (KI value is a compensation coefficient obtained to ensure that the surface temperature rise of the electronic control component does not exceed the enterprise standard or national standard temperature); and for the target power supply circuit, a required target voltage value is updated as V_OUT = reference voltage value ± V_OFFSET, and a required target current value is updated as I_OUT = reference current value ± I_OFFSET.

It should be understood that in order to achieve a feedback-based adjustment for the output voltage of the target power supply circuit during the alternating operation of the first power supply circuit 41 and the second power supply circuit 42, as shown in Fig. 2, in some implementations of the present disclosure, the electrolysis generation apparatus further comprises a voltage sampling circuit 45. An input terminal of the voltage sampling circuit 45 is connected to the first power supply circuit 41 and the second power supply circuit 42, and an output terminal of the voltage sampling circuit 45 is connected to the electrolysis controller 43. The voltage sampling circuit 45 is configured to acquire a voltage sampling value of the target power supply circuit and feed the voltage sampling value back to the electrolysis controller 43. The electrolysis controller 43 is further configured to adjust the output voltage of the target power supply circuit based on the voltage sampling value fed back by the voltage sampling circuit 45, so as to change the output voltage of the target power supply circuit to the target voltage value.

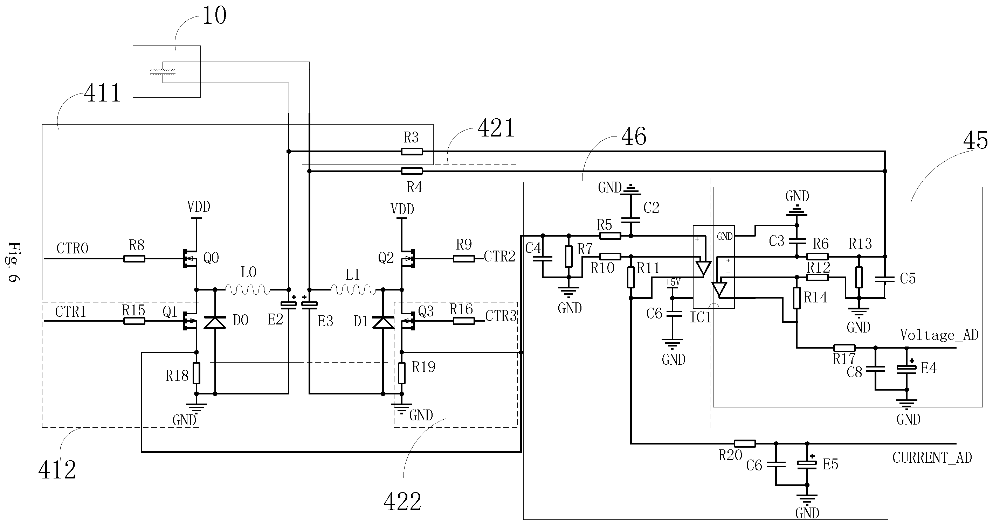

Fig. 6 is a schematic circuit diagram of the first power supply circuit, the second power supply circuit, the voltage sampling circuit and a current detection circuit in Fig. 2. For convenience of understanding the design of the voltage sampling circuit 45, an example of the voltage sampling circuit 45 will be given below with reference to Fig. 6, but the voltage sampling circuit 45 is not limited to this example. The voltage sampling circuit 45 comprises an operational amplifier unit IC1 which is configured to amplify a voltage across a third resistor R3 or a fourth resistor R4. The voltage sampling circuit 45 further comprises a thirteenth resistor R13 and a fifth capacitor C5 which play a role in filtering an input voltage, and an eighth capacitor C8 and a fourth polar capacitor E4 which play a role in filtering an output voltage.

In some implementations, a connection relationship in the voltage sampling circuit 45 is as shown in Fig. 6: a first positive electrode input of the operational amplifier unit IC1 is connected to a first side of a third capacitor C3, a second side of the third capacitor C3 is grounded, the first positive electrode input of the operational amplifier unit IC1 is also connected to one end of a sixth resistor R6, the other end of the sixth resistor R6 is connected to a first side of the fifth capacitor C5 and one end of the thirteenth resistor R13, and a second side of the fifth capacitor C5 and the other end of the thirteenth resistor R13 are grounded. A first negative electrode input of the operational amplifier unit IC1 is connected to one end of a twelfth resistor R12 and one end of a fourteenth resistor R14, and the other end of the twelfth resistor R12 is grounded. A first output terminal of the operational amplifier unit IC1 is connected to the other end of the fourteenth resistor R14, the first output terminal of the operational amplifier unit IC1 is also connected to a first end of a seventeenth resistor R17, a second end of the seventeenth resistor R17 is connected to one side of an eighth capacitor C8 and a positive electrode of the fourth polar capacitor E4, the other side of the eighth capacitor C8 and a negative electrode of the fourth polar capacitor E4 are grounded, and an output port for a voltage sampling signal (Voltage_AD) of the voltage sampling circuit 45 is provided at the second end of the seventeenth resistor R17.

In the electrolysis generation apparatus provided according to some implementations of the present disclosure, the voltage sampling circuit 45 is provided to cooperate with the electrolysis controller 43, so as to adjust the output voltage of the target power supply circuit to the target voltage value based on the feedback, thus improving the accuracy of adjusting the output voltage.

It should be understood that in order to achieve a feedback-based adjustment for the output current of the target power supply circuit during the alternating operation of the first power supply circuit 41 and the second power supply circuit 42, as shown in Fig. 2, the electrolysis generation apparatus according to some implementations of the present disclosure further comprises a current sampling circuit 46. An input terminal of the current sampling circuit 46 is connected to the first power supply circuit 41 and the second power supply circuit 42, and an output terminal of the current sampling circuit 46 is connected to the electrolysis controller 43. The current sampling circuit 46 is configured to acquire a current sampling value of the target power supply circuit and feed the current sampling value back to the electrolysis controller 43. The electrolysis controller 43 is further configured to adjust the output current of the target power supply circuit based on the current sampling value fed back by the current sampling circuit 46, so as to change the output current of the target power supply circuit to the target current value.

For convenience of understanding the design of the current sampling circuit 46, an example will be given below with reference to Fig. 6, but the current sampling circuit 46 is not limited to this example. The current sampling circuit 46 comprises: an operational amplifier unit IC1 which is configured to amplify a current sampling value flowing through an eighteenth resistor R18 or a nineteenth resistor R19. A seventh resistor R7 and a fourth capacitor C4 play a role in filtering an input current input, and a ninth capacitor C9 and a fifth polarity capacitor E5 play a role in filtering an output current.

In some implementations, a connection relationship in the current sampling circuit 46 is as shown in Fig. 6: a second positive electrode input of the operational amplifier unit IC1 is connected to a first side of a second capacitor C2 and one end of a fifth resistor R5, a second side of the second capacitor C2 is grounded, the other end of the fifth resistor R5 is connected to a first side of the fourth capacitor C4 and one end of the seventh resistor R7, and a second side of the fourth capacitor C4 and the other end of the seventh resistor R7 are grounded. A second negative electrode input of the operational amplifier unit IC1 is connected to one end of an eleventh resistor R11 and one end of a tenth resistor R10, and the other end of the tenth resistor R10 is grounded. A second output terminal of the operational amplifier unit IC1 is connected to the other end of the eleventh resistor R11, the second output terminal of the operational amplifier unit IC1 is also connected to a first end of a twentieth resistor R20, and a second end of the twentieth resistor R20 is connected to one side of the ninth capacitor C9 and a positive electrode of the fifth polar capacitor E5. The other side of the ninth capacitor C9 and a negative electrode of the fifth polar capacitor E5 are grounded, and an output port for a current sampling signal (CORRENT_AD) of the current sampling circuit 45 is provided at the second end of the twentieth resistor R20.

In the electrolysis generation apparatus provided according to some embodiments of the present disclosure, the current sampling circuit 46 is provided to cooperate with the electrolysis controller 43, so as to adjust the output current of the target power supply circuit to the target current value based on the feedback, thus improving the accuracy of adjusting the output current.

In some embodiments of the present disclosure, the operational amplifier unit IC1 may be applied with a working voltage of 5 V.

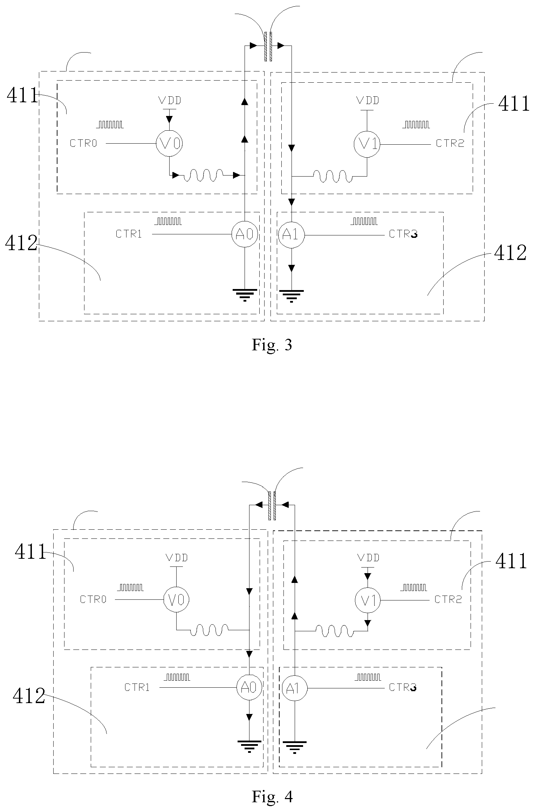

Fig. 3 is a schematic diagram showing a current direction when a first power supply circuit in Fig. 2 operates, and Fig. 4 is a schematic diagram showing a current direction when a second power supply circuit in Fig. 2 operates. Referring to Figs. 3 and 4, the first power supply circuit 41 and the second power supply circuit 42 may be two power supply circuits with the same structure, which are respectively connected to the first electrode 11 and the second electrode 12.

In some implementations, the first power supply circuit 41 and the second power supply circuit 42 may be controlled through a dual-bridge arm, such that the first power supply circuit 41 and the second power supply circuit 42 alternately operate at a preset alternating interval.

As shown in Fig. 3, when the first power supply circuit 41 operates, the current flows from the first electrode 11 to the second electrode 12. In this case, the first electrode 11 acts as a positive electrode and the second electrode 12 acts as a negative electrode. As shown in Fig. 4, when the second power supply circuit 42 operates, the current flows from the second electrode 12 to the second electrode 11. In this case, the first electrode 11 acts as a negative electrode and the second electrode 12 acts as a positive electrode. Therefore, the first electrode 11 and the second electrode 12 can undergo alternating change in polarity, and will not be polarized.

As shown in Figs. 3 and 4, in some implementations, the first power supply circuit 41 may comprise a first voltage source sub-circuit 411 and a first constant current source sub-circuit 412. The first voltage source sub-circuit 411 is provided with a first voltage control signal terminal CTRO, and the first constant current source sub-circuit 412 is provided with a first current control signal terminal CTR1. As shown in Fig. 3, the electrolysis controller 43 is further configured to: when the target power supply circuit is the first power supply circuit 41, provide a pulse signal input to the first voltage control signal terminal CTR0 according to the voltage sampling value fed back by the voltage sampling circuit 45, to adjust an output voltage of the first voltage source sub-circuit 411 to the target voltage value; and synchronously provide a pulse signal input to the first current control signal terminal CTR1 according to the current sampling value fed back by the current sampling circuit 46, to adjust an output current of the first constant current source sub-circuit 412 to the target current value.

As shown in Figs. 3 and 4, in some implementations, the second power supply circuit 42 may comprise a second voltage source sub-circuit 421 and a second constant current source sub-circuit 422. The second voltage source sub-circuit 421 is provided with a second voltage control signal terminal CTR2; and the second constant current source sub-circuit 422 is provided with a second current control signal terminal CTR3. As shown in Fig. 4, the electrolysis controller 43 is further configured to: when the target power supply circuit is the second power supply circuit 42, provide a pulse signal input to the second voltage control signal terminal CTR2 according to the voltage sampling value fed back by the voltage sampling circuit 45, to adjust an output voltage of the second voltage source sub-circuit 421 to the target voltage value; and synchronously provide a pulse signal input to the second current control signal terminal CTR3 according to the current sampling value fed back by the current sampling circuit 46, to adjust an output current of the second constant current source sub-circuit 422 to the target current value.

Referring to Fig. 3, in some implementations, the first voltage source sub-circuit 411 may comprise a first switch device V0 and a first filter circuit. The first voltage control signal terminal CTR0 is arranged at a control terminal of the first switch device V0, a first input terminal of the first switch device V0 is configured to connect a power supply voltage VDD, an input terminal of the first filter circuit is connected to a second input terminal of the first switch device V0, and an output terminal of the first filter circuit is connected to the first electrode 11. The pulse signal input provided to the first voltage control signal terminal CTR0 is controlled by the electrolysis controller 43 to control the on/off of the first switch device V0, so as to adjust the output voltage of the first voltage source sub-circuit 411. It should be noted that in the electrolysis generation apparatus disclosed herein, the first filter circuit plays a filtering role, making the output voltage of the first voltage source sub-circuit 411 more stable.

As shown in Fig. 6, the first switch device V0 may adopt a first MOS transistor Q0. Taking the first filter circuit being an LC filter circuit composed of a first inductor L0 and a second polar capacitor E2 as an example: a gate electrode control terminal of the first MOS transistor Q0 is connected to the first voltage control signal terminal CTR0 through an eighth resistor R8, and a drain electrode of the first MOS transistor Q0 is configured to connect the power supply voltage VDD; one end of the first inductor L0 is connected to a source electrode of the first MOS transistor Q1, the other end of the first inductor L0 is connected to a positive electrode of the second polar capacitor E2, and a negative electrode of the second polar capacitor E2 is grounded. When the first power supply circuit 41 is not required to operate, the first MOS transistor Q0 is switched off; and when the first power supply circuit 41 is required to operate, a duty cycle of the pulse signal input provided to the first voltage control signal terminal CTR0 is controlled by the electrolysis controller 43, to adjust a duty cycle of the first MOS transistor Q0, such that the output voltage of the first voltage source sub-circuit 411 is equal to the target voltage value required for the current electrolyte temperature.

In some implementations, the first voltage source sub-circuit 411 further comprises a first diode D0 playing a role in freewheeling current. A negative electrode of the first diode D0 is connected to the source electrode of the first MOS transistor Q0, and a positive electrode of the first diode D0 is grounded. The first voltage source sub-circuit 411 further comprises a third resistor R3 that provides the feedback-based adjustment. One end of the third resistor R3 is connected to the positive electrode of the second polar capacitor E2, and the other end of the third resistor R3 is connected to the voltage sampling circuit 45. Thus, the output voltage of the first voltage source sub-circuit 411 is adjusted based on the voltage sampling value fed back by the voltage sampling circuit 45.

Referring to Figs. 3 and 4, in some implementations, the first constant current source sub-circuit 412 comprises a second switch device A0. The first current control signal terminal CTR1 is connected to a control terminal of the second switch device A0, a first input terminal of the second switch device A0 is connected to the second input terminal of the first switch device V0, and a second input terminal of the second switch device A0 is grounded. The pulse signal input provided to the first current control signal terminal CTR1 is controlled by the electrolysis controller 43 to control the on/off of the second switch device A0, so as to adjust the output current of the first constant current source sub-circuit 412.

Referring to Fig. 6, the second switch device A0 may adopt a second MOS transistor Q1. A gate electrode control terminal of the second MOS transistor Q1 is connected to the first current control signal terminal CTR1 through a fifteenth resistor R15, a drain electrode of the second MOS transistor Q1 is connected to the source electrode of the first MOS transistor Q0, and a source electrode of the second MOS transistor Q1 is grounded through the eighteenth resistor R18. The electrolysis controller 43 adjusts a duty cycle of the second MOS transistor Q1 according to the current sampling value fed back by the current sampling circuit 46, thereby adjusting the output current of the first constant current source sub-circuit 412.

In some implementations, the second voltage source sub-circuit 421 comprises a third switch device V1 and a second filter circuit.

The second voltage control signal terminal CTR3 is arranged at a control terminal of the third switch device V1, a first input terminal of the third switch device V1 is configured to connect the power supply voltage VDD; an input terminal of the second filter circuit is connected to a second input terminal of the third switch device V1, and an output terminal of the second filter circuit is connected to the second electrode 12. The second filter circuit plays a filtering role, making the output voltage of the second voltage source sub-circuit 421 more stable.

Referring to Fig. 6, the third switch device V1 may adopt a third MOS transistor Q2. Taking the first filter circuit being an LC filter circuit composed of a first inductor L1 and a third polar capacitor E3 as an example: a gate electrode control terminal of the third MOS transistor Q2 is connected to the second voltage control signal terminal CTR2 through a ninth resistor R9, a drain electrode of the third MOS transistor Q2 is configured to connect the power supply voltage VDD; one end of the second inductor L1 is connected to a source electrode of the third MOS transistor Q2, the other end of the second inductor L1 is connected to a positive electrode of the third polar capacitor E3, and a negative electrode of the third polar capacitor E3 is grounded. When the second power supply circuit 42 is not required to operate, the third MOS transistor Q2 is switched off; and when the second power supply circuit 42 is required to operate, a duty cycle of the pulse signal input provided to the second voltage control signal terminal CTR2 is controlled by the electrolysis controller 43, to adjust a duty cycle of the third MOS transistor Q2, such that the output voltage of the second voltage source sub-circuit 421 is adjusted.

Referring to Fig. 6, the second voltage source sub-circuit 421 may further comprise a second diode D1 playing a role in freewheeling current. A negative electrode of the second diode D1 is connected to the source electrode of the third MOS transistor Q2, and a positive electrode of the second diode D1 is grounded.

Referring to Fig. 6, the second voltage source sub-circuit 421 may further comprise a fourth resistor R4 that provides the feedback-based adjustment. One end of the fourth resistor R4 is connected to the positive electrode of the third polar capacitor E3, and the other end of the fourth resistor R4 is connected to the voltage sampling circuit 45. Thus, the output voltage of the second voltage source sub-circuit 421 is adjusted based on the voltage sampling value fed back by the voltage sampling circuit 45.

Referring to Figs. 3 and 4, in some implementations, the second constant current source sub-circuit 422 comprises a fourth switch device A1. The second current control signal terminal CTR3 is arranged at a control terminal of the fourth switch device A1, a first input terminal of the fourth switch device A1 is connected to the second input terminal of the third switch device V1, and a second input terminal of the fourth switch device A1 is grounded. The pulse signal input provided to the second current control signal terminal CTR3 is controlled by the electrolysis controller 43 to control the on/off of the third switch device V1, so as to adjust the output current of the second constant current source sub-circuit 422.

Referring to Fig. 6, the fourth switch device A1 may adopt a fourth MOS transistor Q3. A gate electrode control terminal of the fourth MOS transistor Q3 is connected to the second current control signal terminal CTR3 through a sixteenth resistor R16, a drain electrode of the fourth MOS transistor Q3 is connected to the source electrode of the third MOS transistor Q2, and a source electrode of the fourth MOS transistor Q3 is grounded through the nineteenth resistor R19. The electrolysis controller 43 adjusts a duty cycle of the pulse signal input provided to the second current control signal terminal CTR3 according to the current sampling value fed back by the current sampling circuit 46, thereby adjusting a duty cycle of the fourth MOS transistor Q3 and then realizing adjustment of the output current of the second constant current source sub-circuit 422.

It can be understood that in order to control the first power supply circuit 41 and the second power supply circuit 42 to alternately operate at a preset alternating interval, the electrolysis controller 43 is configured to: time a current operating duration of the target power supply circuit; switch to the other one of the first power supply circuit 41 and the second power supply circuit 42 for operation when the current operating duration reaches the preset alternating interval, and time a next operating duration.

Due to the fact of not knowing which power supply circuit needs to be switched to operate when switching between the two power supply during the operation process of the electrolysis generation apparatus, it is necessary to compare the cumulative operating duration of the two power supply circuits to determine which power supply circuit is switched to operate.

In some implementations, a first cumulative operating duration S1 corresponding to the first power supply circuit 41 and a second cumulative operating duration S2 corresponding to the second power supply circuit 42 are read from a storage area; the first cumulative operating duration S1 is compared with the second cumulative operating duration S2; if the first cumulative operating duration S1 is greater than the second cumulative operating duration S2, the second power supply circuit 42 is switched to for operation, and the first cumulative operating duration S1 is updated in the storage area; otherwise, the first power supply circuit 41 is switched to for operation, and the second cumulative operating duration S2 is updated in the storage area.

In other implementations, during the alternating operation of the first power supply circuit 41 and the second power supply circuit 42, the first cumulative operating duration S1 of the first power supply circuit 41 is updated after one operation of the first power supply circuit 41 is completed; and the second cumulative operating duration S2 of the second power supply circuit 42 is updated after one operation of the second power supply circuit 42 is completed.

In some implementations, a calculator for timing a current operating duration is started to time a current operating duration S0. When the current operating duration S0 satisfies S0 ≥ S_Set (where S_Set is the preset alternating interval, and S_Set is measured in hour, for example, S_Set is set to 1 hour), the first cumulative operating duration S1 of the first power supply circuit 41 and the second cumulative operating duration S2 of the second power supply circuit 42 stored in the storage area are read, and it is judged whether S1 > S2; if yes, the second power supply circuit 42 is switched to for operation, and the first cumulative operating duration S1 is updated to S1= S1+S_Set. Otherwise, the first power supply circuit 41 is controlled to operate, and the second cumulative operating duration S2 is updated to S2 = S2+S_Set.

Based on the same inventive concept, the present disclosure further provides a control method for an electrolysis generation apparatus. Referring to Figs. 1 and 2, the electrolysis generation apparatus comprises: a first electrode 11 and a second electrode 12 which are arranged opposite and spaced apart from each other, a first power supply circuit 41 connected to the first electrode 11, and a second power supply circuit 42 connected to the second electrode 12. The control method for an electrolysis generation apparatus comprises: controlling the first power supply circuit 41 and the first power supply circuit 41 to alternately operate at a preset alternating interval, so as to change the direction of a current between the first electrode 11 and the second electrode 12.

In some implementations, the electrolysis generation apparatus further comprises an electrolyzer 30 for containing electrolyte. The first electrode 11 and the second electrode 12 are arranged in the electrolyte in the electrolyzer 30. The control method for an electrolysis generation apparatus further comprises: detecting a current electrolyte temperature; and adjusting an output voltage and an output current of a target power supply circuit according to the current electrolyte temperature, where the target power supply circuit is the first power supply circuit 41 or the second power supply circuit 42.

In some implementations, controlling the first power supply circuit 41 and the second power supply circuit 42 to alternately operate at a preset alternating interval comprises: timing a current operating duration of the target power supply circuit; switching to the other one of the first power supply circuit 41 and the second power supply circuit 42 for operation when the current operating duration reaches the preset alternating interval, and timing a next operating duration.

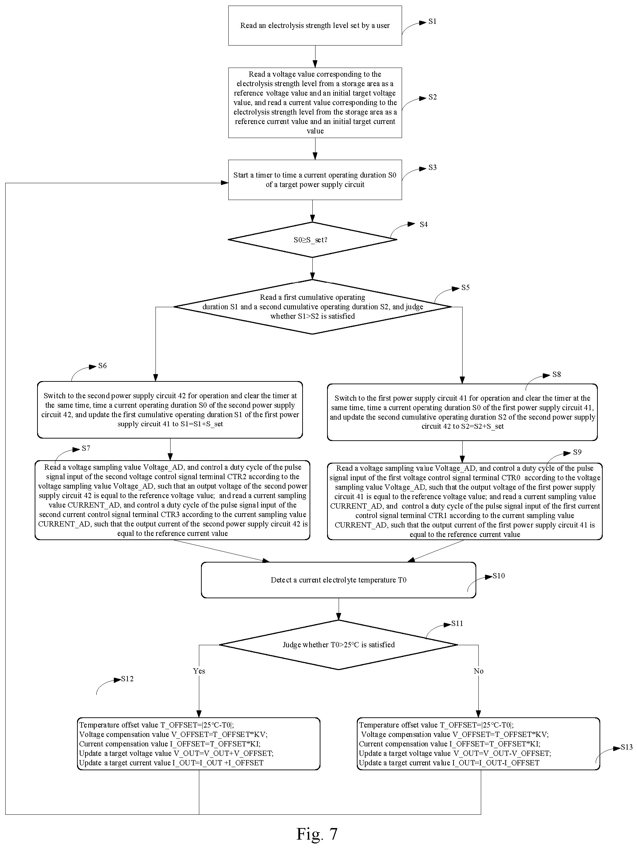

Fig. 7 is a flowchart of a control method for an electrolysis generation apparatus according to some embodiments of the present disclosure. In order to make those having ordinary skills in the art to accurately understand the control method for an electrolysis generation apparatus provided by the present disclosure, with reference to Fig. 7, a control process of the control method will be described below by taking a disinfection machine comprising a hypochlorous acid generation apparatus as an example, comprising the following steps S1 to S13.

In a step of S1, an electrolysis strength level set by a user is read.

In a step of S2, a voltage value corresponding to the electrolysis strength level is read from a storage area as a reference voltage value and an initial target voltage value V_OUT, and a current value corresponding to the electrolysis strength level is read from the storage area as a reference current value and an initial target current value I_OUT.

In a step of S3, a timer is started to time a current operating duration S0 of a target power supply circuit.

In a step of S4, it is judged whether S0 ≥ S_set (preset alternating interval) is satisfied, if yes, S5 is then performed.

In the step of S5, a first cumulative operating duration S1 of the first power supply circuit 41 and a second cumulative operating duration S2 of the second power supply circuit 42 are read from the storage area, and it is judged whether S1 > S2 is satisfied; if yes, S6 to S7 are performed; otherwise, S8 to S9 are performed.

In the step of S6, the second power supply circuit 42 is switched to for operation and the timer is cleared at the same time, a current operating duration S0 of the second power supply circuit 42 is timed, and the first cumulative operating duration S1 of the first power supply circuit 41 is updated to S1= S1+S_set.

In the step of S7, a voltage sampling value Voltage_AD is read, and a duty cycle of the pulse signal input of the second voltage control signal terminal CTR2 is controlled according to the voltage sampling value Voltage_AD, such that the output voltage of the second power supply circuit 42 is equal to the reference voltage value; and a current sampling value CURRENT_AD is read, and a duty cycle of the pulse signal input of the second current control signal terminal CTR3 is controlled according to the current sampling value CURRENT_AD, such that the output current of the second power supply circuit 42 is equal to the reference current value.

As shown in Fig. 4, a duty cycle of the first MOS transistor Q0 is controlled through a CTR0 pin, while the third MOS transistor Q2 is switched off. A feedback signal is amplified by the operational amplifier unit |C1 to obtain the voltage sampling value Voltage_AD, and the duty cycle of the first MOS transistor Q0 is adjusted according to the value Voltage_AD, such that the output voltage is equal to V_OUT; a duty cycle of the fourth MOS transistor Q3 is controlled through a CTR3 pin, while the second MOS transistor Q1 is switched off, the current sampling value CURRENT_AD is read, and the duty cycle of the Q3 is adjusted according to the value CURRENT_AD, such that the output current is equal to I_OUT.

In the step of S8, the first power supply circuit 41 is switched to for operation and the timer is cleared at the same time, a current operating duration S0 of the first power supply circuit 41 is timed, and the second cumulative operation duration S2 of the second power supply circuit 42 is updated to S2 = S2+S_set.

In the step of S9, a voltage sampling value Voltage_AD is read, and a duty cycle of the pulse signal input of the first voltage control signal terminal CTR0 is controlled according to the voltage sampling value Voltage_AD, such that the output voltage of the first power supply circuit 41 is equal to the reference voltage value; and a current sampling value CURRENT_AD is read, and a duty cycle of the pulse signal input of the first current control signal terminal CTR1 is controlled according to the current sampling value CURRENT_AD, such that the output current of the first power supply circuit 41 is equal to the reference current value.

Referring to Fig. 3, a duty cycle of the third MOS transistor Q2 is controlled through a CTR2 pin, while the first MOS transistor Q0 is switched off. A feedback signal is amplified by the operational amplifier IC1 to obtained the voltage sampling value Voltage_AD, and the duty cycle of the third MOS transistor Q2 is adjusted according to the value Voltage_AD, such that the output voltage is equal to V_OUT; and a duty cycle of the second MOS transistor Q1 is controlled through a CTR1 pin, while the fourth MOS transistor Q3 is switched off, the current sampling value CURRENT_AD is read, and the duty cycle of the second MOS transistor Q1 is adjusted according to the value CURRENT_AD, such that the output current is equal to l_OUT.

In a step of S10, a current electrolyte temperature T0 is detected.

In a step of 511, it is judged whether T0 > 25°C is satisfied, if yes, S12 is performed; otherwise, S13 is performed.

In the step of S12, a temperature offset value T_OFFSET is calculated as T_OFFSET = |25°C-T0 |, thus obtaining a voltage compensation value V_OFFSET = T_OFFSET*KV (KV value is a compensation coefficient obtained when the surface temperature rise of an electronic control component does not exceed the enterprise standard temperature), and obtaining a current compensation value I_OFFSET = T_OFFSET*KI (KI value is a compensation coefficient obtained when the surface temperature rise of the electronic control component does not exceed the enterprise standard temperature); a target voltage value V_OUT V_OUT = V_OUT+V_OFFSET is updated to V_OUT = V_OUT+V_OFFSET; and a target current value I_OUT is updated to I_OUT = I_OUT +I_OFFSET.

In the step of S13, a temperature offset value T_OFFSET is calculated as T_OFFSET = |25°C-T0 |, thus obtaining a voltage compensation value V_OFFSET = T_OFFSET*KV (KV value is a compensation coefficient obtained when the surface temperature rise of the electronic control component does not exceed the enterprise standard temperature), and obtaining a current compensation value I_OFFSET = T_OFFSET*KI (KI value is a compensation coefficient obtained when the surface temperature rise of the electronic control component does not exceed the enterprise standard temperature); a target voltage value V_OUT is updated to V_OUT = V_OUT-V_OFFSET; and a target current value I_OUT is updated to I_OUT = I_OUT-I_OFFSET.

Based on the description of the control steps of the control method for an electrolysis generation apparatus provided by the present disclosure, it can be seen that by controlling the first power supply circuit 41 and the second power supply circuit 42 to alternately operate to supply power to the first electrode 11 and the second electrode 12, the direction of the current between the first electrode 11 and the second electrode 12 can be changed to prevent polarization of the first electrode 11 and the second electrode 12.

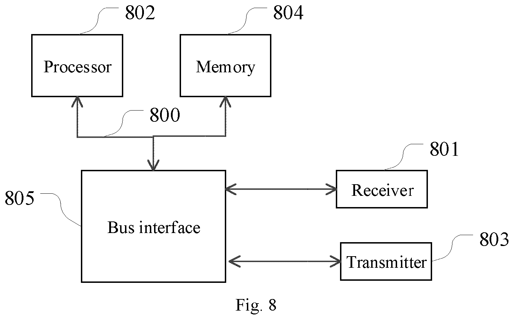

Based on the same inventive concept, the present disclosure further provides an electrical device. Fig. 8 is a schematic structural diagram of an electrical device according to some embodiments of the present disclosure. Referring to Figs. 1 to 6 and 8, the electrical device provided according to some embodiments of the present disclosure comprises an electrolysis generation apparatus. The electrolysis generation apparatus comprises a first electrode 11 and a second electrode 12 which are arranged opposite and spaced apart from each other. The electrical device further comprises a first power supply circuit 41 connected to the first electrode 11, and a second power supply circuit 42 connected to the second electrode 12. The electrical device further comprises a memory 804, a processor 802 and a computer program stored in the memory 804 and runnable on the processor 802, where computer program, when executed by the processor 802, causes the processor 802 to implement the control method for an electrolysis generation apparatus described in any one of the embodiments.

For a bus architecture (represented by a bus 800), the bus 800 may comprise any number of interconnected buses and bridges, and the bus 800 comprises and connects various circuits of one or more processors 802 and memory 804. The bus 800 can also connect together various other circuits, such as peripheral devices, voltage regulators and power management circuits, which are well known in the art, and therefore will not be further described herein. A bus interface 805 provides an interface between the bus 800 and a receiver 601 and a transmitter 603. The receiver 601 and the transmitter 603 may be a same element, that is, a transceiver, which provides a unit for communicating with various other apparatuses on a transmission medium. The processor 602 is responsible for managing the bus 600 and general processing, and the memory 604 may be used to store data used by the processor 602 when performing operations.

In some implementations, if the electrical device is a disinfection machine, the electrolysis generation apparatus may be a hypochlorous acid generation apparatus.

By utilizing one or more embodiments provided in the present disclosure, the electrolysis assembly comprises a first electrode and a second electrode which are arranged opposite and spaced apart from each other; a first power supply circuit is connected to the first electrode; a second power supply circuit is connected to the second electrode; and an electrolysis controller is configured to control the first power supply circuit and the second power supply circuit to alternately operate at a preset alternating interval, so as to change the direction of a current between the first electrode and the second electrode. In the above technical scheme, two power supply circuits are provided for the electrolysis assembly, and the two power supply circuits are controlled to alternately operate to change polarities of the first electrode and the second electrode, such that the direction of the current between the first electrode and the second electrode is changed, and a current reversal between the first electrode and the second electrode can be controlled by adding a simple structure. Thus, a simple and effective current reversal is achieved, to prevent polarization of the electrodes, thereby prolonging the service life of the electrolysis assembly, and reducing circuit complexity.

By utilizing one or more embodiments provided in the present disclosure, the current and voltage of a power supply circuit is controlled according to the change in electrolyte temperature at the position where the first electrode and the second electrode are located, such that a maximum electrolysis power at the current electrolyte temperature can be achieved according to the current and voltage output by the power supply circuit, thereby improving electrolysis efficiency.

The functions described herein may be implemented in hardware, software executed by a processor, firmware, or any combination thereof. If implemented in software executed by a processor, the functions may be stored on or transmitted via a computer-readable medium as one or more instructions or codes. Other examples and embodiments are within the scope of the appended claims of the present disclosure. For example, due to the nature of software, the functions described above may be implemented using software executed by a processor, hardware, firmware, hard wiring, or any combination thereof. In addition, various functional units may be integrated into one processing unit, or each of the units may exist alone physically, or two or more units may be integrated into one unit.

In several embodiments provided in the present application, it should be understood that the disclosed technical content may be realized in other ways. The apparatus embodiment described above is only schematic. For example, the division of the units is only a logical function division, and there may be another division method in actual implementation, for example, multiple units or assemblies may be combined or integrated into another system, or some features may be ignored or may not be executed. In addition, the mutual coupling or direct coupling or communication connection shown or discussed may be indirect coupling or communication connection through some interfaces, units or modules, which may be electrical, mechanical or other forms.

The units described as separate components may or may not be physically separated, components as control apparatuses may or may not be physical units, that is, they may be located in one place, or may be distributed onto multiple units. Some or all of the units may be selected according to actual needs to achieve the object of the scheme in above embodiments.

If the integrated units are implemented in the form of software function units and sold or used as independent products, they can be stored in a computer-readable storage medium. Based on such understanding, the technical scheme of the present disclosure essentially or the part that contributes to the existing technology, or part or all of the technical scheme may be embodied in the form of a software product. The computer software product is stored in a storage medium, and comprises several instructions for instructing a computer device (which may be a personal computer, a server, a network device, or the like) to perform all or some of the steps of the method described in each embodiment of the present disclosure. The aforementioned storage medium comprises: a U disk, a Read-Only Memory (ROM), a Random Access Memory (RAM), a mobile hard disk, a magnetic disk or an optical disk and other media that can store program codes.

The embodiments described above are just some embodiments of the present disclosure and are not intended to limit the present disclosure. For those having ordinary skills in the art, there may be various changes and variations in the present disclosure. Any modification, equivalent replacement, improvement, etc., made within the scope and principle of the present disclosure shall fall within the scope of claims of the present disclosure.

## Claims

1. An electrolysis generation apparatus, comprising:
an electrolysis assembly, comprising a first electrode and a second electrode arranged opposite and spaced apart from each other;
a first power supply circuit, connected to the first electrode;
a second power supply circuit, connected to the second electrode; and
an electrolysis controller, controlling the first power supply circuit and the second power supply circuit to alternately operate at a preset alternating interval, so as to change the direction of a current between the first electrode and the second electrode.

2. The apparatus of claim 1, further comprising:
an electrolyzer, wherein the electrolysis assembly is arranged in the electrolyzer, and the electrolyzer contains electrolyte; and
a temperature detection circuit detecting a current electrolyte temperature;
the electrolysis controller further acquires the current electrolyte temperature detected by the temperature detection circuit, and
adjusts an output voltage and an output current of a target power supply circuit according to the current electrolyte temperature, the target power supply circuit is a currently operating power supply circuit among the first power supply circuit and the second power supply circuit.

3. The apparatus of claim 2, wherein the electrolysis controller further:
determines a temperature offset between the current electrolyte temperature and a reference temperature, and a reference current value and a reference voltage value are preset for the reference temperature;
determines a voltage compensation value and a current compensation value matched with the current electrolyte temperature according to the temperature offset and a preset compensation coefficient;
update a target voltage value according to the voltage compensation value and the reference voltage value, and adjust the output voltage of the target power supply circuit to the target voltage value; and
update a target current value according to the current compensation value and the reference current value, and adjust the output current of the target power supply circuit to the target current value.

4. The apparatus of claim 3, further comprising a voltage sampling circuit, wherein an input terminal of the voltage sampling circuit is connected to the first power supply circuit and the second power supply circuit, and an output terminal of the voltage sampling circuit is connected to the electrolysis controller;
the voltage sampling circuit acquires a voltage sampling value of the target power supply circuit and feeds the voltage sampling value back to the electrolysis controller;
the electrolysis controller further adjusts the output voltage of the target power supply circuit according to the voltage sampling value, so as to change the output voltage of the target power supply circuit to the target voltage value.

5. The apparatus of claim 4, further comprising a current sampling circuit, wherein an input terminal of the current sampling circuit is connected to the first power supply circuit and the second power supply circuit, and an output terminal of the current sampling circuit is connected to the electrolysis controller;
the current sampling circuit acquires a current sampling value of the target power supply circuit and feeds the current sampling value back to the electrolysis controller;
the electrolysis controller further adjusts the output current of the target power supply circuit according to the current sampling value, so as to change the output current of the target power supply circuit to the target current value.

6. The apparatus of claim 5, wherein the first power supply circuit comprises:
a first voltage source sub-circuit, provided with a first voltage control signal terminal; and
a first constant current source sub-circuit, provided with a first current control signal terminal;
the electrolysis controller in response to the target power supply circuit being the first power supply circuit, further provides a pulse signal input to the first voltage control signal terminal according to the voltage sampling value fed back by the voltage sampling circuit, to adjust the output voltage of the first voltage source sub-circuit to the target voltage value; and provides a pulse signal input to the first current control signal terminal according to the current sampling value fed back by the current sampling circuit, so as to adjust the output current of the first constant current source sub-circuit to the target current value.

7. The apparatus of claim 5, wherein the second power supply circuit comprises:
a second voltage source sub-circuit, provided with a second voltage control signal terminal; and
a second constant current source sub-circuit, provided with a second current control signal terminal;
the electrolysis controllerin response to the target power supply circuit being the second power supply circuit, further provides a pulse signal input to the second voltage control signal terminal according to the voltage sampling value fed back by the voltage sampling circuit, to adjust the output voltage of the second voltage source sub-circuit to the target voltage value; and provides a pulse signal input to the second current control signal terminal according to the current sampling value fed back by the current sampling circuit, so as to adjust the output current of the second constant current source sub-circuit to the target current value.

8. The apparatus of claim 6, wherein,
the first voltage source sub-circuit comprises:
a first switch device, the first voltage control signal terminal is arranged at a control terminal of the first switch device, a first input terminal of the first switch device connects a power supply voltage, and a duty cycle of the first switch device is adjusted through the pulse signal input of the first voltage control signal terminal, so as to adjust the output voltage of the first voltage source sub-circuit; and
a first filter circuit, an input terminal of the first filter circuit is connected to a second input terminal of the first switch device, and an output terminal of the first filter circuit is connected to the first electrode;
the first constant current source sub-circuit comprises:
a second switch device, the first current control signal terminal is arranged at a control terminal of the second switch device, a first input terminal of the second switch device is connected to the second input terminal of the first switch device, a second input terminal of the second switch device is grounded, and a duty cycle of the second switch device is adjusted through the pulse signal input of the first current control signal terminal, so as to adjust the output current of the first constant current source sub-circuit.

9. The apparatus of claim 7, wherein,
the second voltage source sub-circuit comprises:
a third switch device, the second voltage control signal terminal is arranged at a control terminal of the third switch device, a first input terminal of the third switch device connects a power supply voltage, and a duty cycle of the third switch device is adjusted through the pulse signal input of the second voltage control signal terminal, so as to adjust the output voltage of the second voltage source sub-circuit; and
a second filter circuit, an input terminal of the second filter circuit is connected to a second input terminal of the third switch device, and an output terminal of the second filter circuit is connected to the second electrode;
the second constant current source sub-circuit comprises:
a fourth switch device, the second current control signal terminal is arranged at a control terminal of the fourth switch device, a first input terminal of the fourth switch device is connected to the second input terminal of the third switch device, a second input terminal of the fourth switch device is grounded, and a duty cycle of the fourth switch device is adjusted through the pulse signal input of the second current control signal terminal, so as to adjust the output current of the second constant current source sub-circuit.

10. The apparatus of claim 2, wherein the electrolysis controller further:
times a current operating duration of the target power supply circuit;
switches to the other one of the first power supply circuit and the second power supply circuit for operation in response to the current operating duration reaching the preset alternating interval, and times a next operating duration.

11. The apparatus of claim 10, wherein the electrolysis controller further:
reads a first cumulative operating duration corresponding to the first power supply circuit and a second cumulative operating duration corresponding to the second power supply circuit from a storage area;
compares the first cumulative operating duration with the second cumulative operating duration;
in response to the first cumulative operating duration being greater than the second cumulative operating duration, switches to the second power supply circuit for operation, and updates the first cumulative operating duration in the storage area; and
in response to the first cumulative operating duration being not greater than the second cumulative operating duration, switches to the first power supply circuit for operation, and updates the second cumulative operating duration in the storage area.

12. A control method for an electrolysis generation apparatus, wherein the electrolysis generation apparatus comprises: a first electrode and a second electrode arranged opposite and spaced apart from each other, a first power supply circuit connected to the first electrode, and a second power supply circuit connected to the second electrode;
the method comprises:
controlling the first power supply circuit and the second power supply circuit to alternately operate at a preset alternating interval, so as to change the direction of a current between the first electrode and the second electrode.

13. The control method for the electrolysis generation apparatus of claim 12, wherein the electrolysis generation apparatus further comprises an electrolyzer for containing electrolyte, and the first electrode and the second electrode are arranged in the electrolyzer;
the method further comprises:
detecting a current electrolyte temperature; and
adjusting an output voltage and an output current of a target power supply circuit according to the current electrolyte temperature, the target power supply circuit is a currently operating power supply circuit among the first power supply circuit and the second power supply circuit.

14. The control method for the electrolysis generation apparatus of claim 12, wherein controlling the first power supply circuit and the second power supply circuit to alternately operate at the preset alternating interval comprises:
timing a current operating duration of the target power supply circuit; switching to the other one of the first power supply circuit and the second power supply circuit for operation in response to the current operating duration reaching the preset alternating interval, and timing a next operating duration.

15. An electrical device, comprising an electrolysis generation apparatus, wherein the electrolysis generation apparatus comprises a first electrode and a second electrode arranged opposite and spaced apart from each other, a first power supply circuit connected to the first electrode, and a second power supply circuit connected to the second electrode;
the electrical device further comprises: a memory, a processor, and a program stored in the memory and executable on the processor, when the program is executed by the processor, causes the processor to perform the method described in any one of claims 12 to 14.

16. The electrical device of claim 15, wherein the electrolysis generation apparatus is a hypochlorous acid generation apparatus.
